(19) Europäisches Patentamt
European Patent Office
Office européen des brevets

(11) **EP 4 080 414 B1**

(12) **EUROPEAN PATENT SPECIFICATION**

(45) Date of publication and mention
of the grant of the patent:
**10.12.2025 Bulletin 2025/50**

(51) International Patent Classification (IPC):
***G06N 3/04*** *(2023.01)*          ***G06N 3/08*** *(2023.01)*
***G06N 20/00*** *(2019.01)*          ***G06N 5/00*** *(2023.01)*

(21) Application number: **22159396.5**

(22) Date of filing: **01.03.2022**

(52) Cooperative Patent Classification (CPC):
**G06N 20/00; G06N 3/045; G06N 3/08;** G06N 5/01

(54) **SYSTEMS AND METHODS FOR IDENTIFYING MANUFACTURING DEFECTS**

SYSTEME UND VERFAHREN ZUR IDENTIFIZIERUNG VON HERSTELLUNGSFEHLERN

SYSTÈMES ET PROCÉDÉS PERMETTANT D'IDENTIFIER DES DÉFAUTS DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.04.2021 US 202163179111 P
11.05.2021 US 202117317806**

(43) Date of publication of application:
**26.10.2022 Bulletin 2022/43**

(73) Proprietor: **Samsung Display Co., Ltd.
Yongin-si, Gyeonggi-do 17113 (KR)**

(72) Inventors:
• **QU, Shuhui**
**Fremont, 94536 (US)**
• **LEE, Janghwan**
**Pleasanton, 94588 (US)**
• **KANG, Yan**
**Sunnyvale, 94065 (US)**

(74) Representative: **Marks & Clerk LLP
15 Fetter Lane
London EC4A 1BW (GB)**

(56) References cited:
WO-A1-2020/073737     CN-A- 111 044 525
US-A1- 2021 102 527     US-A1- 2021 374 941

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD

One or more aspects of embodiments according to the present disclosure relate to classifiers, and more particularly to a machine-learning (ML) classifiers for identifying manufacturing defects that filter out low confident data samples.

BACKGROUND

The mobile display industry has grown rapidly in recent years. As new types of display panel modules and production methods are being deployed, surface defects have been harder to inspect using just traditional mechanisms. It would be desirable to employ artificial intelligence (AI) to automatically predict whether a manufactured display panel module is faulty or not. In fact, it would be desirable to employ AI to predict defects in other hardware products, and not just display panel modules.

The above information disclosed in this Background section is only for enhancement of understanding of the background of the present disclosure, and therefore, it may contain information that does not form prior art.

CN111044525A discloses a product defect detection method comprising constructing a defect detection framework; training a classification network by using a sample image of products containing different defect types to obtain the classification network capable of classifying the defect types existing in the sample image; and training a positioning detection network by using the sample image of the products containing different defect types to obtain the positioning detection network capable of positioning the position of each type of defects in the sample image.

SUMMARY

Disclosed herein is a computer-implemented method and a system as described in the appended claims.

BRIEF DESCRIPTION OF THE DRAWINGS

Non-limiting and non-exhaustive embodiments of the present embodiments are described with reference to the following figures, wherein like reference numerals refer to like parts throughout the various views unless otherwise specified.

FIG. 1 is a block diagram of a system for making predictions relating to products manufactured via a manufacturing process according to one embodiment;
FIG. 2 is a flow diagram of a process for making predictions relating to products manufactured via a manufacturing process according to one embodiment;
FIG. 3 is more detailed flow diagram of a confident learning process according to one embodiment;
FIG. 4 is an example confusion matrix according to one embodiment;
FIG. 5 is block diagram of defect detection implemented as a joint fusion model according to one embodiment; and
FIG. 6 is a conceptual layout diagram of a training dataset as it undergoes confident learning and outlier detection learning according to one embodiment.

DETAILED DESCRIPTION

Hereinafter, example embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, descriptions thereof may not be repeated. Further, in the drawings, the relative sizes of elements, layers, and regions may be exaggerated and/or simplified for clarity.

As new types of display modules and product methods are deployed, and as product specifications tighten, it may be desirable to enhance equipment and quality-control methods to maintain production quality. For example, it may be desirable to monitor for manufacturing defects during production.

One way to monitor for manufacturing defects is by employing human inspectors that have the expertise to identify the defects. In this regard,

high-resolution (sub-micron level) images may be acquired around defect areas. A human inspector may then review the acquired images to classify the defects into categories in accordance with the type of the defects and how the defects may affect the production yield. In more detail, the human inspector may sample a number of defect images and spend significant time searching for features to separate unclassified defect images into categories. Training the human inspectors, however, takes time. Even when trained, it may take weeks for a human inspector to identify manufacturing defects in a current batch of images, making it hard to expand the human inspector's work to multiple instances at a time.

Machine learning (ML) models may be used for quicker detection of manufacturing defects that may be expanded to multiple instances at a time. In order for ML models to be useful, however, they should be accurate in their predictions. In addition, the models should be generalized so that accurate predictions may be made even on new data sets that have not been encountered previously.

In general terms, embodiments of the present disclosure are directed to identifying manufacturing defects using deep learning ML models. In one embodiment, data samples with noisy labels (referred to as unconfident or noisy data) in a training dataset may be identified during training. The clean and noisy data may then be used to train an outlier detection model (also referred to as an outlier filter) that is used during deployment to filter out unconfident/noisy data samples. This may ensure that the data to be predicted by a defect detection model during deployment falls in a high-confident prediction area, improving the accuracy of predictions by the defect detection model.

In one embodiment, a boundary that is used by the outlier filter to filter out unconfident data is tuned using a tuning threshold hyperparameter. The threshold hyperparameter may be determined upon considering a tradeoff between a rejection rate (or amount of coverage of the data), and the accuracy of the prediction by the defect detection. In one embodiment, accuracy of the prediction increases when coverage decreases. In this regard, the threshold hyperparameter may be selected based on identification of current requirements in terms of accuracy and/or coverage.

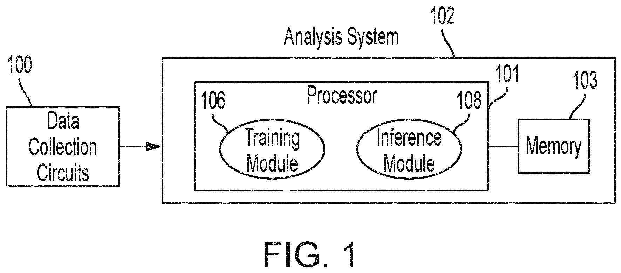

FIG. 1 is a block diagram of a system for making predictions relating to products manufactured via a manufacturing process according to one embodiment. The system includes, without limitations, one or more data collection circuits 100, and an analysis system 102. The data collection circuits 100 may include, for example, one or more imaging systems configured to acquire image data of a product during a manufacturing process such as, for example, X-ray machines, Magnetic Resonance Imaging (MRI) machines, Transmission Electron Microscope (TEM) machines, Scanning Electron Microscope (SEM) machines, and/or the like. The image data generated by the data collection circuits 100 may be, for example, spectroscopy images such as Energy-Dispersive X-ray Spectrocopy (EDS) images and/or High-Angle Annular Dark-Field (HAADF) images, microscopy images such as Transmission Electron Microscopy (TEM) images, thermal images, and/or the like. The acquired data samples may not be limited to still images, but may also include video, text, Lidar data, radar data, image fusion data, temperature data, pressure data, and/or the like.

The data collection circuits 100 may be placed, for example, on top of a conveyer belt that carries a product during production. The data collection circuits 100 may be configured to acquire data samples (e.g. image data) of a product multiple times (e.g. every second or few seconds) over a period of manufacturing time.

The analysis system 102 may include a training module 106 and an inference module 108. The components of the analysis system 102 may be implemented by one or more processors (e.g., a processor 101 in FIG. 1) having an associated memory (e.g., a memory 103 in FIG. 1), including, for example, application specific integrated circuits (ASICs), general purpose or special purpose central processing units (CPUs), digital signal processors (DSPs), graphics processing units (GPUs), and programmable logic devices such as field programmable gate arrays (FPGAs). Although the training and inference modules 102, 106 are described as separate functional units, a person of skill in the art will recognize that the functionality of the modules may be combined or integrated into a single module, or further subdivided into further sub-modules.

The training module 106 may be configured to generate and train a plurality of machine learning models for classifying product manufacturing defects. The plurality of machine learning models may be generated and trained based on training data provided by the data collection circuits 100. In one embodiment, a defect detection model is trained using the collected training dataset. The defect detection model may be a joint fusion model that integrates two or more neural networks that have been independently trained using data collected by different types of data collection circuits 100. The defect detection model need not be a joint fusion model trained with data from different sources, but could also be, for example, any deep neural network known in the art and may be trained using data from a single source.

In one embodiment, the training module 106 is configured to identify noisy/unconfident data in the training dataset that bear labels that are predicted to be erroneous. Such data may be assigned a label that identifies the data as noisy/unconfident. The remaining data may be deemed to be clean/confident data. In one embodiment, the noisy/unconfident training data, as well as the clean/confident training data, are used to train an outlier filter. Supervised learning may be used to calculate a decision boundary of the outlier filter based on features of the noisy/unconfident data. The decision boundary may be further tuned using a tuning threshold hyperparameter. Once trained, the outlier filter may be invoked to filter out unconfident/noisy data samples in an input dataset.

The inference module 108 may be configured to classify product manufacturing defects during deployment during an inference stage based on the defect detection model. In this regard, the data samples acquired by the data collection circuits 100 may be provided to the outlier filter for identifying confidence of the data samples. In one embodiment, the outlier filter is configured to determine whether a data sample is an outlier. For example, the data sample may be identified as an outlier if it matches the features of data that is marked as noisy/unconfident.

In one embodiment, a data sample identified as an outlier is removed from an input dataset. In this regard, removed data samples are not provided to the defect detection model for making predictions. Thus, data that is provided to the defect detection model is data that is deemed to be confident data, improving accuracy of classifications by the inference module 108.

The classification made by the inference module 108 may include classification of products as faulty or not faulty, classification of faulty products into defect categories, and/or the like. In one embodiment, the analysis system 102 may generate a signal based on the classification outcome. For example, the signal may be for prompting action by a human inspector in response to classifying the product as a faulty product. The action may be to remove the product from the production line for purposes of re-inspection.

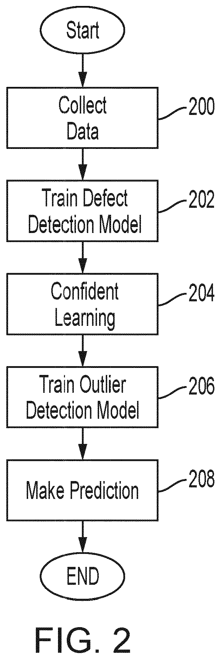

FIG. 2 is a flow diagram of a process for making predictions relating to products manufactured via a manufacturing process according to one embodiment. It should be understood that the sequence of steps of the process is not fixed, but can be altered in any convenient manner as recognized by a person of skill in the art, including the order of certain steps and performing various steps in parallel, for example.

At block 200, data of products manufactured during the manufacturing process is captured by one or more of the data collection circuits 100. The captured data may be, for example, image data. In one embodiment, the image data of a particular product is captured concurrently by two or more disparate data collection circuits 100. For example, a first data collection circuit 100 may capture a TEM image of a product, and a second data collection circuit 100 may capture an HAADF image of the same product.

The data captured by the data collection circuits 100 may be used for training the ML models. In this regard, images around defect areas of a product that are acquired by the data collection circuits 100 may be reviewed and labeled by a human inspector for identifying the defect.

At block 202, the training module 106 trains the defect detection model based on the training dataset. In the one embodiment, the training dataset that is used to train the defect detection model includes both clean and noisy data samples. The trained defect detection model may be, for example, a joint fusion model as described in U.S. Patent Application Ser. No. US 2021-0319546 A1filed on July 24, 2020, entitled "Image-Based Defects Identification and Semi-Supervised Localization," or U.S. Patent Application Ser. No. US 2021-0319270 A1, filed on July 24, 2020, entitled "Fusion Model Training Using Distance Metrics,". In some embodiments, the defect detection model is single machine learning model (instead of a joint fusion model) configured with a machine learning algorithm such as, for example, random forest, extreme gradient boosting (XGBoost), support-vector machine (SVM), deep neural network (DNN), and/or the like.

Because humans are prone to errors, the labels attached to the images of the training dataset may be erroneous at times. Labeling errors may be a problem as the accuracy of the models depend on the accuracy of the training data.

In one embodiment, the training module 106 engages in confident learning at block 204 for identifying and labeling the noisy data samples in the training dataset. The noisy data samples may include image data that are predicted to be mis-labeled by the human inspector. In one embodiment, confident learning is based on an estimation of a joint distribution between noisy (given) labels, and uncorrupted (true) labels, as described in further detail in Northcutt et. al, "Confident Learning: Estimating Uncertainty in Dataset Labels," (2021) available at https://arxiv.orq/abs/1911.00068v4.

The training of the defect detection model may occur concurrently with confident learning. In this manner, training of the defect detection model may be quicker than in the above-referenced U.S. Application Ser. No. US 2022-0318672 A1, where the model is trained using the clean data samples.

In one embodiment, in response to the confident learning at block 204, the training module 106 identifies the data samples in the training dataset that are predicted to be noisy, and labels the identified data samples as noisy.

At block 206, the training module 106 uses the noisy and clean data samples from the confident learning block 204 for training the outlier filter. In this regard, the training module 106 extracts the features of the noisy data from the defect detection model, and calculates the decision boundary using supervised learning. One or more convolutional neural networks may be used for the feature extraction. In some embodiments, the training module 106 extracts the features of both the noisy and the clean data, and calculates the decision boundary based on the extracted features. The calculated decision boundary may determine the boundary that separates the noisy data from the clean data. A machine learning algorithm such as, for example, logistic regression, may be used for identifying the decision boundary.

In one embodiment, the training module 106 is further configured to tune the decision boundary based on a tuning threshold hyperparameter. The tuning threshold may control how close the decision boundary is to the noisy data without being filtered out. The closer the boundary to the noisy data, the greater the coverage of the data samples that are kept for purposes of defect prediction. However, accuracy of the prediction may decrease as coverage decreases. In one embodiment, a desired coverage and/or accuracy are entered as inputs, and the training module 106 selects an appropriate tuning threshold as a function of the entered inputs.

At block 208, the trained outlier filter and the trained defect detection model are used at deployment for identifying defects in products, such as, for example, display panels. In one embodiment, the inference module 108 invokes the outlier filter to predict the confidence of the data samples captured by the data collection circuits 100 during a manufacturing process. In one embodiment, the outlier filter identifies the data samples that have features/parameters that cause the data to be classified as noisy/unconfident, and removes such data samples from the captured dataset. The removed unconfident data samples may be deemed to be outlier data that may be the result of degradation in the machinery used in the manufacturing process.

In one embodiment, the inference module 108 invokes the defect detection model for making predictions in the cleaned, high-confidence data samples. In this manner, accuracy of predictions by the defect detection may increase when compared to current art defect detection models.

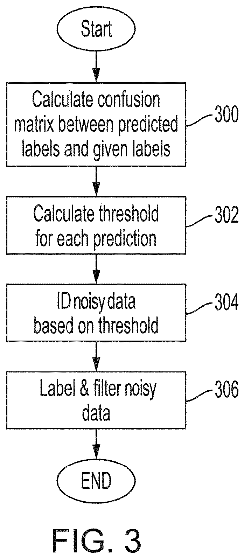

FIG. 3 is more detailed flow diagram of the confident learning at block 204 according to one embodiment. At block 300, the training module 106 calculates a confusion matrix between predicted (true/correct) labels and given labels (by a human person) of a test dataset. A deep learning model may be invoked for predicting the true/correct label of a data sample in the test dataset. A confusion matrix may be generated based on a comparison of the predicted labels against the given labels. The confusion matrix may be a joint distribution between the predicted labels and given labels, for each predicted label. For example, given three possible classes of labels: apples, pears, and oranges, a first entry in the confusion matrix may identify a probability that a data sample that is predicted to be an apple is actually labeled an apple, a second entry may identify a probability that a data sample that is predicted to be an apple is actually labeled a pear, and a third entry may identify a probability that a data sample that is predicted to be an apple is actually labeled an orange. Similar joint distributions may be calculated for pear and orange predictions.

At block 302, the training module 106 calculates a threshold based on the confusion matrix for each predicted label. In one embodiment, the joint probability values are used as the threshold values. In some embodiments, the threshold values may be based on a peak signal-to-noise ratio (PSNR) for the predicted class, that may be calculated based on the joint probability distributions for the predicted class. In one embodiment, the threshold value for a particular predicted class may be based on a difference between the probability of the predicted true label and the probability of the class. An example pseudocode for calculating the threshold values may be as follows:

Obtain a set of prediction probabilities (a matrix of size: n_samples * n_classes)

For each class c in n_classes:

Calculate (difference of class c) = (probability of the predicted true label) - (the probability of the class c); (size: n_samples * 1)

Find the k-th smallest value of the difference of class c, as the threshold of the class c

At block 304, the training module 106 identifies the noisy, unconfident data in the training dataset based on the computed threshold. For example, assuming that the joint probability distribution of apples being labeled as pears is 14%, the training module 106 may identify 14% of the data samples labeled as pears, which have a highest probability of being apples, as being noisy data. In some embodiments, a sample whose difference between the probability of the predicted true label and the probability of the class, is smaller than the threshold set for the class, is identified as a noisy data sample.

At block 306, the training module 106 labels and filters out the noisy data from the training dataset. For example, the training module 106 may label the noisy data as "noisy" or the like.

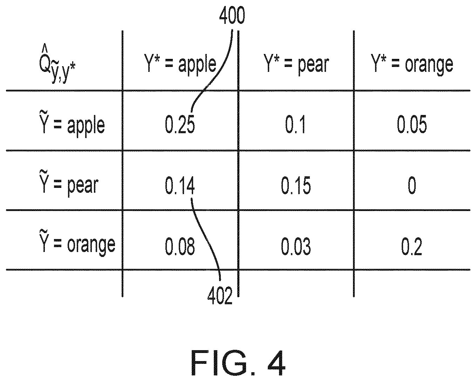

FIG. 4 is an example confusion matrix according to one embodiment. In the example of FIG. 4, the joint probability 400 of a data sample that is predicted to be an apple that is actually labeled an apple is 0.25. Also, the joint probability 402 of a data sample that is predicted to be an apple but is actually labeled as a pear is 0.14.

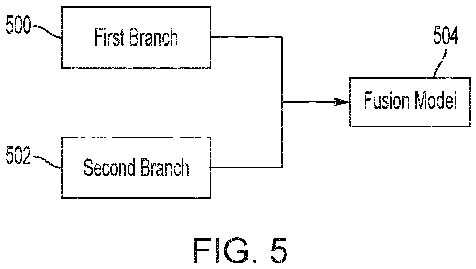

FIG. 5 is block diagram of the defect detection model implemented as a joint fusion model according to one embodiment. The joint fusion model includes a first neural network branch 500 trained with a first set of data samples from a first data collection circuit 100, and a second neural network branch 502 trained with a second set of data samples from a second data collection circuit 100. In one embodiment, the training module 106 trains each branch independently of the other branch, and joins the first branch 500 and the second branch 502 into a joint fusion model 504 through convolutional layers. The first set of data may be internally aligned, the second set of data may be internally aligned, and the first and second sets of data may not be aligned relative to each other. In one embodiment, the first set of data may include spectroscopy images, such as Energy-Dispersive X-ray Spectrocopy (EDS) image used with High-Angle Annular Dark-Field (HAADF) images, and the second set of data may include microscopy images such as Transmission Electron Microscopy (TEM) images.

In one embodiment, each of the first branch 500 and the second branch 502 includes a respective attention module. The attention module for a neural network branch (e.g., the first neural network branch 500 or the second neural network branch 502) may be configured to overlay a spatial attention onto the images received by the neural network branch to highlight areas where a defect might arise. For example, a first attention module of the first branch 500 may overlay a first spatial attention heat map onto the first set of data received by the first branch 500, and a second attention module of the second branch 502 may overlay a second spatial attention heat map onto the second set of data received by the second branch 502. The attention module may include a space map network (e.g., corresponding to the spatial attention heat map) which is adjusted based on a final predicted label (error type / no error) of an input image. The space map network may represent a spatial relationship between the input image and the final predicted label.

The first set of data, which may be a set of spectroscopy images, may come in multiple channels (X channels in this example), each channel representing data related to specific chemical element or composition. Each neural network branch may include a channel attention module and a spatial attention module in the form of a Convolutional Block Attention Module (CBAM) (described below). In addition, a branch that uses a multiple-image source, such as the first branch 500, may include an extra channel attention module. The additional channel attention module may indicate which element input channels to focus on. In one embodiment, the joint fusion model allows product information obtained from disparate data collection circuits 100 to be integrated and trained together, so that the information may complement each other to make predictions about product manufacturing defects.

In one embodiment, the spatial attention module and the channel attention module are networks that are trained in a semi-supervised manner to force the larger neural network (e.g., the respective neural network branch) to put greater weight on data coming from the selected channel or spatial region. In training, the spatial/channel attention module learns which features are associated with errors, and in turn which spatial areas or channels are associated with the error via the associated features. Once trained, these modules operate within the larger neural network structure to force the neural network to pay "more attention" to select regions/channels (e.g., by setting one or more weights associated with the regions/channels). In some embodiments, the attention modules may be included in a CBAM, which is an effective attention module for feed-forward convolutional neural networks. Both the spectroscopy branch and the microscopy branch may include a CBAM which provides spatial and channel attention. The spatial attention may be a space-heat map related to error location, and the channel attention may be related to the color/grayscale channel of the data.

As mentioned above, within the first branch 500, there may be an extra channel attention module in addition to a CBAM. The CBAM provides a spatial heat map and color-channel attention feature. Thus, the additional channel attention module may focus attention on the channel that is associated with the target element that is of interest to the particular defect type.

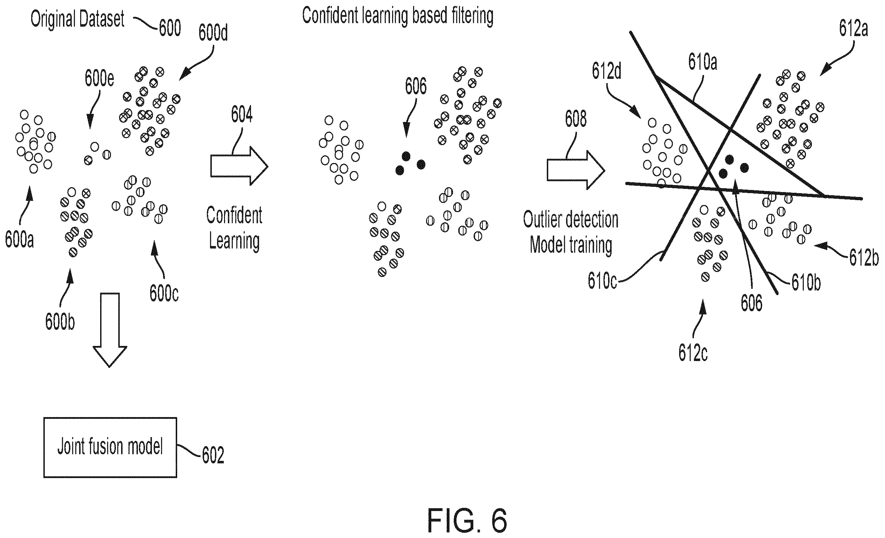

FIG. 6 is a conceptual layout diagram of a training dataset as it undergoes confident learning and outlier detection learning according to one embodiment. In the embodiment of FIG. 6, original training data samples 600 acquired by the data collection circuits 100 are used for training a defect detection model 602 such as, for example, a joint fusion model. The data samples may include data samples 600a-600d of a first type (e.g. clean/confident), and data samples 600e of a second type (e.g. noisy/not confident). Both the clean and noisy data samples 600a-600e may be used to train the defect detection model.

In addition to training the defect detection model, the training module 106 may engage in confident learning 604 for identifying the noisy data samples 600e and generating labeled noisy data 606. The training module 106 may then engage in training of the outlier filter 608 based on the confident learning 604 of the training dataset. In this regard, one or more decision boundaries 610a-610c may be calculated for separating the noisy data 606 from clean data 612a-612d. The one or more decision boundaries 610a-610c may be calculated using supervised learning based on features of the labeled noisy data 606 and/or clean data 612a-612d extracted from the defect detection model 602. The one or more decision boundaries 610a-610c may further be tuned using a tuning threshold. The outlier filter may then be used during inference to separate clean/confident data samples from noisy/unconfident data samples. In one embodiment, if the data sample is predicted to be noisy/unconfident, it is rejected (e.g. removed from an input dataset) and not used by the defect detection model for making defect predictions.

In some embodiments, the systems and methods for identifying manufacturing defects discussed above, are implemented in one or more processors. The term processor may refer to one or more processors and/or one or more processing cores. The one or more processors may be hosted in a single device or distributed over multiple devices (e.g. over a cloud system). A processor may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processor, as used herein, each function is performed either by hardware configured, i.e., hard-wired, to perform that function, or by more general-purpose hardware, such as a CPU, configured to execute instructions stored in a non-transitory storage medium (e.g. memory). A processor may be fabricated on a single printed circuit board (PCB) or distributed over several interconnected PCBs. A processor may contain other processing circuits; for example, a processing circuit may include two processing circuits, an FPGA and a CPU, interconnected on a PCB.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section.

The terminology used herein is for the purpose of describing particular embodiments only and is not intended to be limiting of the inventive concept. As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". As used herein, the terms "use," "using," and "used" may be considered synonymous with the terms "utilize," "utilizing," and "utilized," respectively.

Although embodiments of a system and method for identifying manufacturing defects have been specifically described and illustrated herein, many modifications and variations will be apparent to those skilled in the art.

## Claims

1. A computer-implemented method for classifying manufacturing defects of products manufactured via a manufacturing process, comprising:

    training a first machine learning model (106) with a training dataset (202), wherein the training dataset comprises acquired image data of a product manufactured via the manufacturing process;
    identifying, from the training dataset, a data sample satisfying a criterion (204);
    training a second machine learning model (108) to learn features of the data sample (206);
    receiving an input dataset including first and second product data, wherein the input dataset comprises acquired image data of a product manufactured via the manufacturing process;
    invoking the second machine learning model (108) for predicting confidence of the first and second product data based on the learned features of the data sample (208); and
    in response to predicting the confidence of the first and second product data, removing the first product data from the input dataset and invoking the first machine learning model (106) for generating a classification based on the second product data,
    wherein the criterion is a confidence level below a set threshold,
    wherein the first product data is associated with a confidence level below a set threshold, and the second product data is associated with a confidence level above the set threshold, and
    wherein the output of the first machine learning model indicates classification of the acquired image data of products as faulty or not faulty, or into defect categories.

2. The method of claim 1, wherein the training of the second machine learning model (108) includes invoking supervised learning based on the learned features of the data sample.

3. The method of claim 2, wherein the training of the second machine learning model (108) includes identifying a decision boundary for separating data having the features of the data sample from other data.

4. The method of claim 3 further comprising:
    tuning the decision boundary based on a tuning threshold.

5. The method of any one of claims 1 to 4 further comprising:
    generating a signal based on the classification, wherein the signal is for triggering an action.

6. A system for classifying manufacturing defects, the system comprising:

a data collection circuit (100) configured to collect an input dataset (200), wherein the input dataset comprises acquired image data of a product manufactured via the manufacturing process; and

a processing circuit coupled to the data collection circuit, the processing circuit having logic for:

training a first machine learning model (106) with a training dataset (202), wherein the training dataset comprises acquired image data of a product manufactured via the manufacturing process;

identifying, from the training dataset, a data sample satisfying a criterion (204);

training a second machine learning model (108) to learn features of the data sample (206);

receiving the input dataset including first and second product data;

invoking the second machine learning model (108) for predicting confidence of the first and second product data based on the learned features of the data sample (208); and

in response to predicting the confidence of the first and second product data, removing the first product data from the dataset and invoking the first machine learning model (106) for generating a classification based on the second product data,

wherein the criterion is a confidence level below a set threshold,

wherein the first product data is associated with a confidence level below a set threshold, and the second product data is associated with a confidence level above the set threshold, and

wherein the output of the first machine learning model indicates classification of the acquired image data of products as faulty or not faulty, or into defect categories.

7. The system of claim 6, wherein the training of the second machine learning model (108) includes invoking supervised learning based on the learned features of the data sample.

8. The system of claim 7, wherein the training of the second machine learning model (108) includes identifying a decision boundary for separating data having the features of the data sample from other data.

9. The system of claim 8, wherein the processing circuit has the logic further for tuning the decision boundary based on a tuning threshold.

10. The system of any one of claims 6 to 9, wherein the processing circuit has the logic further for:
generating a signal based on the classification, wherein the signal is for triggering an action.

**Patentansprüche**

1. Computerimplementiertes Verfahren zum Klassifizieren von Herstellungsfehlern von Produkten, die in einem Herstellungsprozess hergestellt werden, umfassend:

Trainieren eines ersten maschinellen Lernmodells (106) mit einem Trainingsdatensatz (202), wobei der Trainingsdatensatz erfasste Bilddaten eines im Herstellungsprozess hergestellten Produkts umfasst;

Identifizieren einer Datenprobe aus dem Trainingsdatensatz, die ein Kriterium erfüllt (204);

Trainieren eines zweiten maschinellen Lernmodells (108), um Merkmale der Datenprobe zu erlernen (206);

Empfangen eines Eingabedatensatzes, der erste und zweite Produktdaten beinhaltet, wobei der Eingabedatensatz erfasste Bilddaten eines im Herstellungsprozess hergestellten Produkts umfasst;

Aufrufen des zweiten Maschinenlernmodells (108) zum Vorhersagen einer Konfidenz der ersten und zweiten Produktdaten basierend auf den erlernten Merkmalen der Datenprobe (208); und

als Reaktion auf Vorhersagen der Konfidenz der ersten und zweiten Produktdaten, Entfernen der ersten Produktdaten aus dem Eingabedatensatz und Aufrufen des ersten Maschinenlernmodells (106) zum Generieren einer Klassifizierung basierend auf den zweiten Produktdaten,

wobei das Kriterium ein Konfidenzniveau unterhalb eines festgelegten Schwellenwerts ist,

wobei die ersten Produktdaten einem Konfidenzniveau unterhalb eines festgelegten Schwellenwerts zugeordnet sind und die zweiten Produktdaten einem Konfidenzniveau oberhalb des festgelegten Schwellenwerts zugeordnet sind und

wobei die Ausgabe des ersten maschinellen Lernmodells eine Klassifizierung der erfassten Bilddaten von Produkten als fehlerhaft oder nicht fehlerhaft oder in Fehlerkategorien angibt.

2. Verfahren nach Anspruch 1, wobei das Trainieren des zweiten Maschinenlernmodells (108) das Aufrufen eines überwachten Lernens basierend auf den erlernten Merkmalen der Datenprobe beinhaltet.

3. Verfahren nach Anspruch 2, wobei das Trainieren des zweiten Maschinenlernmodells (108) das Identifizieren einer Entscheidungsgrenze zum Trennen von Daten mit den Merkmalen der Datenprobe von anderen Daten beinhaltet.

4. Verfahren nach Anspruch 3, weiter umfassend:
Abstimmen der Entscheidungsgrenze basierend auf einem Abstimmungsschwellenwert.

5. Verfahren nach einem der Ansprüche 1 bis 4, weiter umfassend:
Generieren eines Signals basierend auf der Klassifizierung, wobei das Signal zum Auslösen einer Aktion dient.

6. System zum Klassifizieren von Herstellungsfehlern, wobei das System Folgendes umfasst:

eine Datenerhebungsschaltung (100), die konfiguriert ist, um einen Eingabedatensatz (200) zu erheben, wobei der Eingabedatensatz erfasste Bilddaten eines im Herstellungsprozess hergestellten Produkts umfasst; und
eine Verarbeitungsschaltung, die mit der Datenerhebungsschaltung gekoppelt ist, wobei die Verarbeitungsschaltung eine Logik aufweist zum:

Trainieren eines ersten maschinellen Lernmodells (106) mit einem Trainingsdatensatz (202), wobei der Trainingsdatensatz erfasste Bilddaten eines im Herstellungsprozess hergestellten Produkts umfasst;
Identifizieren einer Datenprobe aus dem Trainingsdatensatz, die ein Kriterium erfüllt (204);
Trainieren eines zweiten maschinellen Lernmodells (108), um Merkmale der Datenprobe zu erlernen (206);
Empfangen des Eingabedatensatzes, der erste und zweite Produktdaten beinhaltet;
Aufrufen des zweiten Maschinenlernmodells (108) zum Vorhersagen einer Konfidenz der ersten und zweiten Produktdaten basierend auf den erlernten Merkmalen der Datenprobe (208); und

als Reaktion auf das Vorhersagen der Konfidenz der ersten und zweiten Produktdaten, Entfernen der ersten Produktdaten aus dem Datensatz und Aufrufen des ersten Maschinenlernmodells (106) zum Generieren einer Klassifizierung basierend auf den zweiten Produktdaten,
wobei das Kriterium ein Konfidenzniveau unterhalb eines festgelegten Schwellenwerts ist,
wobei die ersten Produktdaten einem Konfidenzniveau unterhalb eines festgelegten Schwellenwerts zugeordnet sind und die zweiten Produktdaten einem Konfidenzniveau oberhalb des festgelegten Schwellenwerts zugeordnet sind und
wobei die Ausgabe des ersten maschinellen Lernmodells eine Klassifizierung der erfassten Bilddaten von Produkten als fehlerhaft oder nicht fehlerhaft oder in Fehlerkategorien angibt.

7. System nach Anspruch 6, wobei das Trainieren des zweiten Maschinenlernmodells (108) das Aufrufen eines überwachten Lernens basierend auf den erlernten Merkmalen der Datenprobe beinhaltet.

8. System nach Anspruch 7, wobei das Trainieren des zweiten Maschinenlernmodells (108) das Identifizieren einer Entscheidungsgrenze zum Trennen von Daten mit den Merkmalen der Datenprobe von anderen Daten beinhaltet.

9. System nach Anspruch 8, wobei die Verarbeitungsschaltung weiter die Logik zum Abstimmen der Entscheidungsgrenze basierend auf einem Abstimmschwellenwert aufweist.

10. System nach einem der Ansprüche 6 bis 9, wobei die Verarbeitungsschaltung weiter die Logik aufweist zum:
Generieren eines Signals basierend auf der Klassifizierung, wobei das Signal zum Auslösen einer Aktion dient.

**Revendications**

1. Procédé implémenté par ordinateur pour classer des défauts de fabrication de produits fabriqués au moyen d'un processus de fabrication, comprenant :

l'entraînement d'un premier modèle d'apprentissage automatique (106) avec un ensemble de données d'entraînement (202), dans lequel l'ensemble de données d'entraînement comprend des données d'image obtenues d'un produit fabriqué au moyen du processus de fabrication ;
l'identification, à partir de l'ensemble de données d'apprentissage, d'un échantillon de données satisfaisant un critère (204) ;

l'entraînement d'un second modèle d'apprentissage automatique (108) pour apprendre des caractéristiques de l'échantillon de données (206) ;

la réception d'un ensemble de données d'entrée incluant des premières et secondes données de produit, dans lequel l'ensemble de données d'entrée comprend des données d'image obtenues d'un produit fabriqué au moyen du processus de fabrication ;

l'invocation du second modèle d'apprentissage automatique (108) pour prédire la confiance des premières et secondes données de produit sur la base des caractéristiques apprises de l'échantillon de données (208) ; et

en réponse à la prédiction de la confiance des premières et secondes données de produit, la suppression des premières données de produit de l'ensemble de données d'entrée et l'invocation du premier modèle d'apprentissage automatique (106) pour générer une classification basée sur les secondes données de produit,

dans lequel le critère est un niveau de confiance inférieur à un seuil défini,

dans lequel les premières données de produit sont associées à un niveau de confiance inférieur à un seuil défini et les secondes données de produit sont associées à un niveau de confiance supérieur au seuil défini, et

dans lequel le résultat du premier modèle d'apprentissage automatique indique une classification des données d'image obtenues de produits comme étant défectueux ou non défectueux, ou en catégories de défauts.

2. Procédé selon la revendication 1, dans lequel l'entraînement du second modèle d'apprentissage automatique (108) inclut l'invocation d'un apprentissage supervisé basé sur les caractéristiques apprises de l'échantillon de données.

3. Procédé selon la revendication 2, dans lequel l'entraînement du second modèle d'apprentissage automatique (108) inclut l'identification d'une limite de décision pour séparer des données présentant les caractéristiques de l'échantillon de données d'autres données.

4. Procédé selon la revendication 3 comprenant en outre :
le réglage de la limite de décision sur la base d'un seuil de réglage.

5. Procédé selon l'une quelconque des revendications 1 à 4, comprenant en outre :
la génération d'un signal basé sur la classification, dans lequel le signal est destiné à déclencher une action.

6. Système de classification de défauts de fabrication, le système comprenant :

un circuit de collecte de données (100) configuré pour collecter un ensemble de données d'entrée (200), dans lequel l'ensemble de données d'entrée comprend des données d'image obtenues d'un produit fabriqué au moyen du processus de fabrication ; et

un circuit de traitement couplé au circuit de collecte de données, le circuit de traitement présentant une logique pour :

entraîner un premier modèle d'apprentissage automatique (106) avec un ensemble de données d'entraînement (202), dans lequel l'ensemble de données d'entraînement comprend des données d'image obtenues d'un produit fabriqué au moyen du processus de fabrication ;

identifier, à partir de l'ensemble de données d'apprentissage, un échantillon de données satisfaisant un critère (204) ;

entraîner un second modèle d'apprentissage automatique (108) pour apprendre des caractéristiques de l'échantillon de données (206) ;

recevoir l'ensemble de données d'entrée incluant les premières et secondes données de produit ;

invoquer le second modèle d'apprentissage automatique (108) pour prédire la confiance des premières et secondes données de produit sur la base des caractéristiques apprises de l'échantillon de données (208) ; et

en réponse à la prédiction de la confiance des premières et secondes données de produit, supprimer les premières données de produit de l'ensemble de données et invoquer le premier modèle d'apprentissage automatique (106) pour générer une classification basée sur les secondes données de produit,

dans lequel le critère est un niveau de confiance inférieur à un seuil défini,

dans lequel les premières données de produit sont associées à un niveau de confiance inférieur à un seuil défini et les secondes données de produit sont associées à un niveau de confiance supérieur au seuil défini, et

dans lequel le résultat du premier modèle d'apprentissage automatique indique une classification des données d'image obtenues de produits comme étant défectueux ou non défectueux, ou en catégories de défauts.

**7.** Système selon la revendication 6, dans lequel l'entraînement du second modèle d'apprentissage automatique (108) inclut l'invocation d'un apprentissage supervisé basé sur les caractéristiques apprises de l'échantillon de données.

**8.** Système selon la revendication 7, dans lequel l'entraînement du second modèle d'apprentissage automatique (108) inclut l'identification d'une limite de décision pour séparer des données présentant les caractéristiques de l'échantillon de données d'autres données.

**9.** Système selon la revendication 8, dans lequel le circuit de traitement présente en outre la logique pour régler la limite de décision sur la base d'un seuil de réglage.

**10.** Système selon l'une quelconque des revendications 6 à 9, dans lequel le circuit de traitement présente en outre la logique pour :
générer un signal basé sur la classification, dans lequel le signal est destiné à déclencher une action.

FIG. 1

FIG. 2

```
        ( Start )
            |
            v
 +------------------------+
 | Calculate confusion    |
 | matrix between predicted|---- 300
 | labels and given labels|
 +------------------------+
            |
            v
 +------------------------+
 | Calculate threshold    |---- 302
 | for each prediction    |
 +------------------------+
            |
            v
 +------------------------+
 | ID noisy data          |---- 304
 | based on threshold     |
 +------------------------+
            |
            v
 +------------------------+
 | Label & filter noisy   |---- 306
 | data                   |
 +------------------------+
            |
            v
         ( END )
```

# FIG. 3

| $\hat{Q}_{\tilde{y},y^*}$ | Y* = apple | Y* = pear | Y* = orange |
|---|---|---|---|
| $\tilde{Y}$ = apple | 0.25 | 0.1 | 0.05 |
| $\tilde{Y}$ = pear | 0.14 | 0.15 | 0 |
| $\tilde{Y}$ = orange | 0.08 | 0.03 | 0.2 |

400

402

# FIG. 4

500 First Branch

504

502 Second Branch

Fusion Model

# FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111044525 A
- US 20210319546 A1
- US 20210319270 A1
- US 20220318672 A1

**Non-patent literature cited in the description**

- **NORTHCUTT**. *Confident Learning: Estimating Uncertainty in Dataset Labels*, 2021, https://arxiv.orq/abs/1911.00068v4.